# EUROPEAN PATENT APPLICATION

(11) **EP 0 605 063 A1**
(43) Date of publication of application: **06.07.1994**
(21) Application number: 93203721.1
(22) Date of filing: 29.12.1993
(51) Int. Cl.: A01G 31/00, G05D 11/13

(54) **Method and device for delivering an active substance to a carrier medium**

(30) Priority: 29.12.1992 NL 9202280
(71) Applicant: P. VAN DEN BERG WATERTECHNIEK B.V., 2671 CT Naaldwijk (NL)
(72) Inventor: Van den Berg, Petrus Gerardus Maria, NL-2675 AW Honselersdijk (NL)
(74) Representative: Bartelds, Erik

(57) **Abstract**

The invention relates to a method for dosed delivery to a carrier medium of at least one active substance, by determining a desired volume flow of the active substance and delivering the thus determined volume flow uniformly to the carrier medium, wherein the volume flow of active substance is generated by means of a controlled volume displacement, for instance an injection. Control can take place by pulse-form signals.

The invention also relates to a device for performing the method with a transport conduit (2) for the carrier medium, at least one container (8) for an active substance connected to the transport conduit (2), and a cylinder (34) connecting the container (8) to the transport conduit (2) and having a driven piston (35) movable therein. The drive can be formed by a linear motor (36).

## Description

The invention relates to a method for delivering one or more active substances to a carrier medium. Such methods are already generally known and are applied for instance in the market gardening sector to supply nutrients to water for pumping to a crop. In general a number of different types of nutrient are used in mutually differing proportions. It is herein of great importance that the correct quantity of nutrient and the correct mutual proportions are precisely monitored in order to guarantee optimum growth. Too high a dosage of particular nutrients can result in burning of the crop or stagnation of its growth, while too low a dosage of nutrients can likewise result in stagnation of growth.

In a conventional method for dosed delivery of nutrients to water, use was made of a mixing tank in which the water was mixed with the correct quantity of nutrients. The water was then pumped out of this mixing tank to the crop. This method had the drawback that the dosing of the different nutrients was not capable of interim adjustment and the method was very labour-intensive. It was moreover not possible to re-use the water carried through the crop.

Methods are also known wherein these drawbacks have to some extent been obviated. In one of these known improved methods, the different nutrients are stored separately in supply containers and these substances are delivered to the water flowing past by means of diaphragm pumps. Each diaphragm pump, which is driven by a magnet, receives for this purpose control signals from a process computer. This method has the drawback that the quantity of nutrient for supplying cannot be regulated properly, as the volume flow through the diaphragm pump varies per stroke with the pressure in the water conduit and, due to the pulsating character of the pump, a flow measurement is not easily possible. In addition the nutrients are supplied very unevenly in this known method as the flow speed of the different nutrients varies considerably with corresponding strokes of the diaphragm pump.

In another known method the nutrients are likewise delivered to the water from separate containers. An underpressure is herein created in the water flow, whereby the nutrients are, as it were, sucked out of their containers. The delivered quantity of nutrient from each container is regulated by a quick-action valve arranged between the container and the water conduit and a flow meter. This method has the drawback that, as a result of the slowness of the valve and the inaccuracy of flow meters currently available on the market, the accuracy of the dosing leaves something to be desired. In addition, the mixing is also unsatisfactory with this method as a result of the large differences in outflow speed of the different nutrients. This method also involves great risks, since there is the danger that in the case of malfunction a valve remains open whereby an excess of nutrients is delivered to the water and great damage can be caused to the crop. The detection of malfunctions is moreover limited in this method.

The invention therefore has for its object to provide a method for dosed delivery to a carrier medium of at least one active substance, wherein these drawbacks do not occur. This is achieved according to the invention by determining a desired volume flow of the active substance and delivering the thus determined volume flow uniformly to the carrier medium. Because in this method the volume flow of the active substance is delivered uniformly, the accuracy of the dosing is very great and the dosing is independent of the pressures prevailing in the conduits. This also achieves that the outflow speed of the different nutrients into the carrier medium is practically the same, whereby a good mixing takes place.

Preferably applied variants of the method according to the invention form the subject-matter of the dependent claims 2-6.

The invention also relates to a device for dosed delivery of one or more active substances to a carrier medium. Such devices are likewise known. However, the known devices display the same drawbacks as the above described known methods.

The invention therefore has for its object to provide a device of this type wherein these drawbacks do not occur. This is achieved according to the invention by a device comprising a transport conduit for the carrier medium, at least one container for an active substance connected to the transport conduit and supply means connecting the container to the transport conduit, which supply means are formed by at least one cylinder with a piston movable therein and a power source connected drivingly to the piston. The volume flow can hereby be precisely controlled, irrespective of the pressure in the conduits or the response speed of valves and the like.

Further preferred embodiments of the invention form the subject-matter of the dependent claims 8-15.

Finally, the invention relates to a cylinder for use in a device as described above.

The invention will now be elucidated on the basis of an embodiment, wherein reference is made to the annexed drawing in which like components have like reference numerals, and in which:
fig. 1 shows a schematic, partly perspective view of a first embodiment of the device according to the invention,
fig. 2 is a schematic representation of an alternative embodiment of the device according to the invention,
fig. 3 shows a partly sectional side view of a cylinder for use in the device of fig. 1 or 2, and
fig. 4-6 show flow diagrams of a control program for performing the method according to the invention.

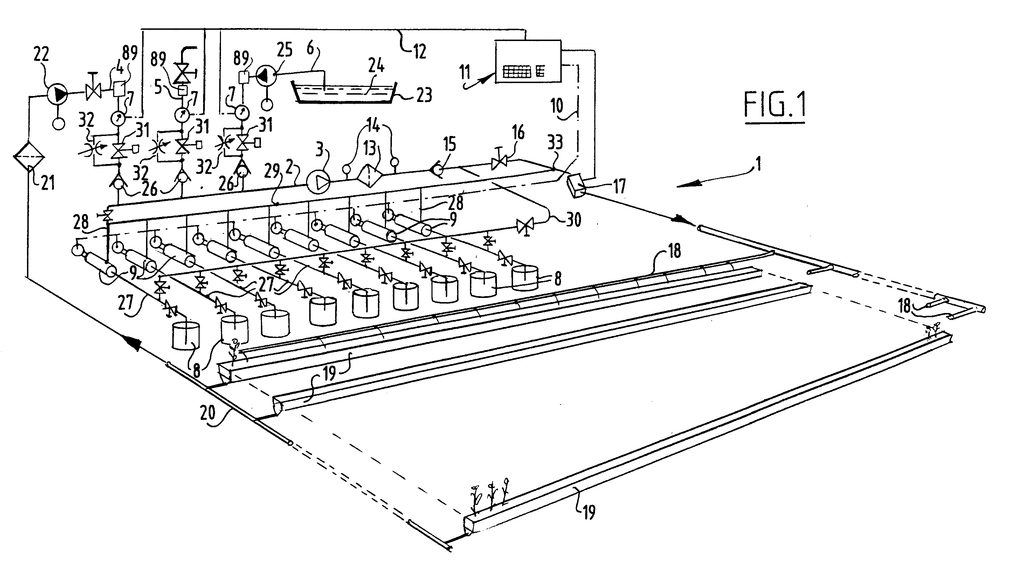

A device 1 (fig. 1) for dosed delivery to a carrier medium, for instance water, of at least one active substance, for instance a nutrient, is provided with a transport conduit 2 for the carrier medium. A transporting pump 3 is arranged in transport conduit 2. The carrier medium is supplied to the transport conduit 2 from three feed conduits 4, 5, 6 which are each provided with means 7 for measuring a volume flow of the carrier medium. Further connected to transport conduit 2 is a number of containers 8 which all contain active substances, for instance fertilizers or nutrients. Each container 8 is connected to the transport conduit 2 over controllable supply means 9 in the form of cylinders with pistons movable therein. The supply means 9 are controlled by programmable control means 11, for instance in the form of a computer, connected thereto over a control line 10. Control means 11 are connected over a signal line 12 to the volume flow measuring means 7. This latter can be adapted to generate a pulse-like output signal, the frequency of which forms a measure of the speed of the medium flowing past.

The transport conduit 2 further has a first filter 13, manometers 14 arranged on either side of filter 13, a non-return valve 15, a closing valve 16 and a measuring unit 17 connected for signal transmission to the control means. Measuring unit 17 can measure for instance the acidity (pH) and the salt content (EC) of the mixture of carrier medium and added nutrients.

Transport conduit 2 is connected to a number of spray conduits 18 arranged in a glasshouse which provide in each case the feed for one or more rows of plants 19 (a "tap section") of a crop. By means of a return conduit 20 the carrier medium delivered to plants 19 and the nutrients absorbed therein are carried back after use by a pump 22 and via a filter 21 to a supply container 89 in the first feed conduit 4. The second feed conduit 5 is intended for feeding mains water and is supplied with water under pressure from the mains water supply which is also carried into a supply container 89. The third feed conduit 6 is connected to a collecting vessel 23 for rainwater 24. This rainwater 24 is likewise carried by means of a pump 25 to a supply container 89 placed through the transport conduit 2. Through interposing of these supply containers 89 all the water for supplying through transport conduit 2, irrespective of its origin, has the same, usually atmospheric pressure.

For supply of water from the supply containers arranged in the different feed conduits 4, 5, 6 to the transport conduit 2, each of the feed conduits 4, 5, 6 is provided with a closing valve 31 and an adjustable throttle 32 placed parallel thereto for accurate dosing. Non-return valves 26 are further arranged between the feed conduits 4, 5, 6 and transport conduit 2.

Each container 8 is connected to the associated cylinder-piston combination 9 over a conduit 27. The cylinder-piston combination 9 is connected in each case over a conduit 28 to a nutrient collection conduit 29, which in this case forms a branch of transport conduit 2. Finally, transport conduit 2 has another branch in the form of a flushing conduit 30 which is connected to the different conduits 27 and whereby the containers 8 and supply means 9 can be flushed with clean water.

During use of the device 1 the volume flow through the feed conduits 4, 5, 6 is measured by the volume flow measuring means 7, and this measured quantity is transmitted in the form of a pulse with a determined frequency over the signal line 12 to control means 11. On the basis of a mixing ratio stored therein of the active substances and the carrier medium the control means calculates the amount of active substances which must be supplied to the measured volume flow of the carrier medium, and this amount for supplying is translated into control signals for the different cylinder-piston combinations 9. In response to the received control signals the cylinder-piston combinations 9 uniformly feed the desired quantity of active substance from the containers 8 to a part of the carrier medium guided through the nutrient collection conduit 29, which medium is subsequently mixed at the position of a connection 33 with the rest of the carrier medium and is delivered to the crop 19.

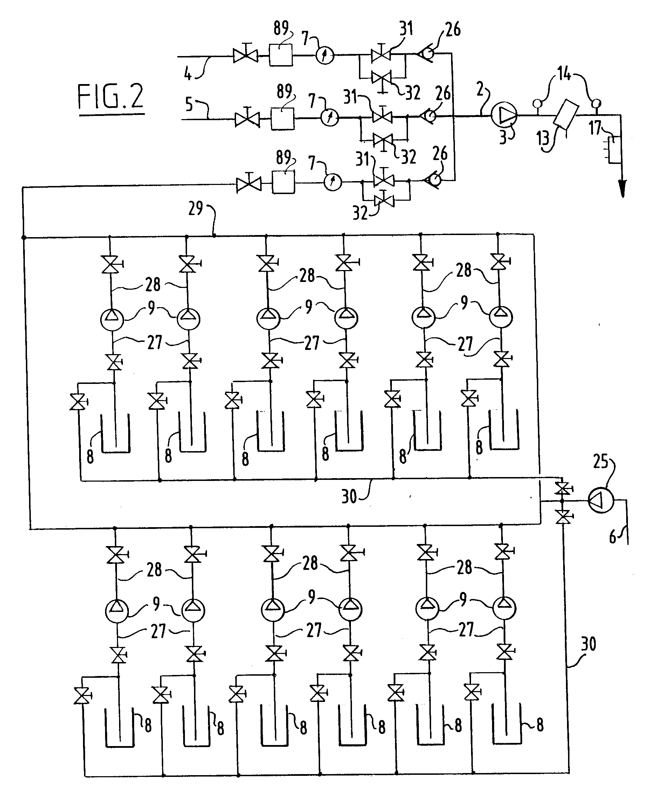

In an alternative embodiment of the device (fig. 2) the active substances are supplied to one of the feed conduits, whereafter the thus obtained mix is carried together with carrier medium from the other feed conduits into the transport conduit 2. The feed conduit where the active substances are injected can herein be the return conduit so that only the active substances still present in the return liquid have to be measured in order then to there admix new active substances in the desired quantities.

In this alternative embodiment the transporting pump 3 is placed behind the mixing point, whereby the active substances are injected into a liquid flow with a comparatively low pressure. This has the advantage that possible leakage of the (aggressive) active substances will not be catastrophic. By moreover regulating the pressure at the position of the nutrient mixing conduit, the pressure against which the nutrients have to be injected can be held constant, whereby the electrical supply current taken up by the cylinder-piston combinations in principle remains constant and can be used as control parameter.

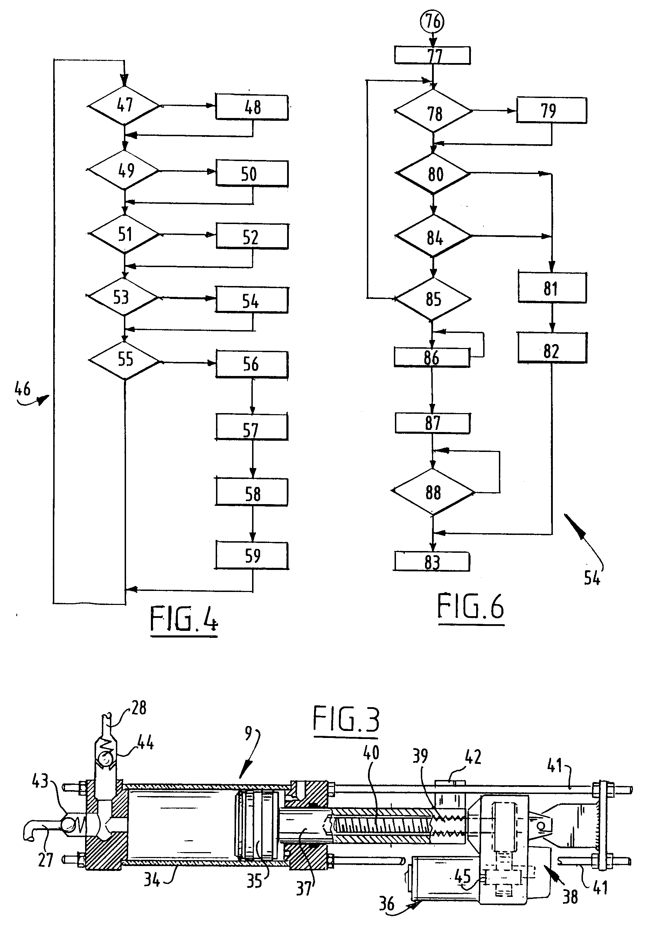

In order to enable an accurate dosing, cylinders 34 are used as supply means 9 which are provided with a piston 35 movable therein and a linear motor 36 drivingly connected to piston 35 (fig. 3). In the embodiment shown the power source 36 is formed by a linear motor 36 which is controlled by the control computer 11 over the control line 10. The motor 36 is connected to a piston rod 37 of piston 35 over a reducing transmission 38 and drives piston rod 37 by means of a worm 40 co-acting with an internal toothing 39 of piston rod 37. The movement of piston rod 37 is guided by ears 42 running along guide rods 41 and connected to piston rod 37.

For use of the dosing device 1 the cylinders 34 are all fully filled by driving the motor 36 such that it moves piston 35 to the right in the drawing, whereby an active substance from the relevant container 8 is drawn into the cylinder 34 through the conduit 27 and a suction opening having a non-return valve 43 arranged therein. When piston 35 has moved wholly to the right, a contact (not shown) is closed, whereby a signal is transmitted to the process computer 11. When all cylinders 34 are thus filled with an active substance and an irrigating operation is initiated, the motor 36 is driven by control means 11 and the piston 35 thereby moved to the left in the cylinder 34 such that the nutrient is pressed uniformly and in the correct ratio in relation to the carrier medium out of the cylinder 34 via a discharge opening, past a non-return valve 44 in the conduit 28 which connects the supply means 9 to the nutrient collection conduit 29. The progress of piston 35 is herein measured by a sensor (not shown) which is integrated into the motor and which monitors the rotation of the output shaft 45 of motor 36 and converts it into a counter signal which is sent to the process control means 11. This signal can be in pulse-form, wherein each revolution of the motor shaft 45 corresponds to a fixed number of pulses. Each pulse then represents a fixed part of the stroke of piston 35 and, at a known diameter of cylinder 34, therefore a fixed displacement volume. When piston 35 reaches the left-hand end of cylinder 34 a contact (not shown) is also closed whereby a signal is generated to control means 11 which indicates that cylinder 34 is entirely emptied.

The shown, single-action cylinder 34 has to be dimensioned such that the maximum volume for displacement during a stroke of piston 35 at least equals the quantity of active substance required for a "tap section" 19, in order to ensure a uniform delivery thereof. A double-walled cylinder could also be used instead, with on either side a suction opening and a delivery opening, and with a single cylinder or two mutually connected cylinders. Herewith, during a delivery stroke on the one side of the cylinder, the other side can then simultaneously be sucked full so that the supply of active substances to the carrier medium can then be continued evenly by reversing the movement of direction of the piston. A number of separate cylinders 34 filled with the same active substance could also be coupled such that an uninterrupted delivery is ensured. Any arrangement of the cylinders is herein conceivable and configurations known from vehicle motors for instance can thus also be applied.

The cylinder wall can be made of glass. This is of particular importance when the active substance is aggressive. Because the active substances only come into contact with the cylinder wall and the front surface of the piston, and the seal between the piston and the cylinder wall is relatively robust, a sufficiently high precision of the dosing remains ensured even in the case of prolonged use of aggressive substances. The cylinder-piston combination is hereby distinguished from a conveyor screw with similar precision, whereby due to deterioration of the seals after only a short time in an aggressive environment the precision diminishes considerably.

Instead of the shown linear motor 36, a stepping motor or a DC-motor can for instance be used. Only the control program then needs to be modified.

Through a suitable choice of the bore and stroke of the cylinder-piston combination 9, any desired quantity of active substance per unit of time can in principle be supplied to the carrier medium. By employing for instance two standard cylinders with a diameter of for instance 100 mm and 160 mm respectively for the different fertilizers and by suitably selecting the so-called "fertilizer factor" (to be discussed hereinbelow), a control range can be achieved wherein the maximum quantity of active substance to be supplied per unit of time amounts to roughly 18,000 times the minimum amount, and the error in the supply of the minimum amount is still less than 1%.

For the control use is made of a feed program stored in the control means 11 which for each of the nutrients to be supplied contains a ratio for mixing of the nutrients with the water flow. This ratio, the so-called fertilizer factor, can be read by the control program.

The supply of each of the nutrients is controlled by a separate "single board" computer which is connected to the main process computer 11. The communication between main computer 11 and the separate control computers is regulated from main computer 11. For this purpose each of the separate control computers runs in each case a program 46 (fig. 4) in which is checked (block 47 and block 49) whether the control means 11 is searching for particular data which is then transmitted in the respective blocks 48 and 50, whereafter a check is made in blocks 51, 53 whether the control computer 11 has sent particular control signals, which then result in running of subroutines 52 and 54 respectively. In block 55 is then determined whether the main computer 11 wishes to transmit data, whereafter this data can be read into the blocks 56, 57, 58 and 59.

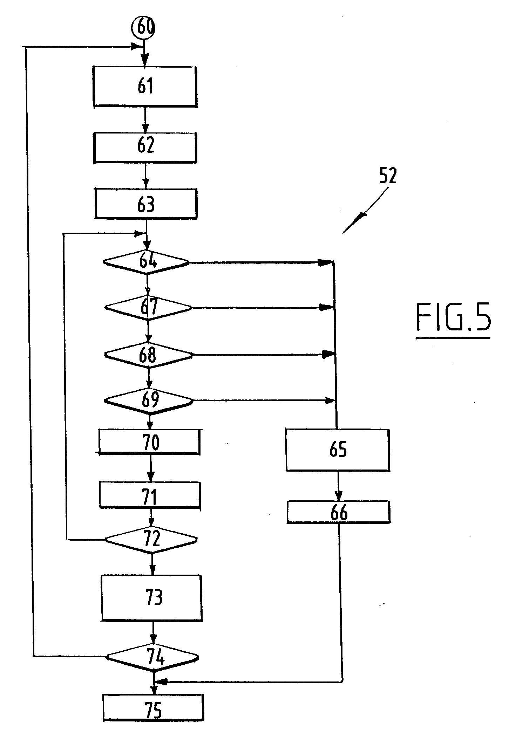

In block 47 is thus checked whether the main computer 11 is requesting a specification of the total quantity of nutrients pumped by the supply means 9 associated with the control computer. If this is the case the program jumps to block 48 in which the status of a counter connected to the sensor of the linear motor 36 is read. This data is then sent to the process computer 11 which can deduce therefrom whether during a previous feed cycle the desired quantity of nutrients was indeed supplied. The program then jumps to block 49 where a check is made whether the process computer 11 is requesting data relating to the status of the separate computer. This status data may for instance comprise error messages. When a request is indeed made for this data, it is sent by the block 50 to the main computer 11. A check is then made whether the main computer 11 has given a command to initiate a feed cycle. Should this be the case the program jumps to block 52 where the subroutine for dosing nutrients is run (fig. 5). When the dosing cycle has been run the program returns to block 53 where a check is made whether a control signal has been sent in order to start filling of the cylinder 34. Should this be found to be the case, a switch is made to block 54 where the subroutine for filling cylinder 34 (fig. 6) is run. From block 54 the program returns to block 55 in which is checked whether the process computer 11 wishes to send on data to the separate control computer. If this is the case, this data is read, particularly the maximum current parameter of for instance 8 bits in block 56, the maximum peak current parameter, likewise an 8 bits signal, in block 57, the minimum current parameter of 8 bits in block 58 and the 12 bits fertilizer factor in block 59.

Delivery of the active substances to the carrier medium can now be controlled with the read parameters. For this purpose the separate control computer of each motor 36 has a dosing subroutine 52 (fig. 5) which, when it is called up, begins in block 60 and then waits in block 62 for a pulse-like signal from volume flow measuring means 7. This pulse-form signal is a measure of the flow speed in the feed conduits 4, 5, 6 and, when the diameter of these conduits is given, therefore also of the total volume flow through these feed conduits. As the mixing ratio of the carrier medium and the active substance is known, and both the volume flow of the carrier medium and the supplied quantity of active substance are measured in numbers of pulses, only a number of pulses of active substance have to be counted per pulse of the carrier medium in order to dose the active substance. When the rising flank of a water pulse is detected in block 61 the program passes on to block 62 where the pulse counter of the sensor connected to motor 36 is set to zero. In block 63 the motor is then started, whereafter the program enters into a loop. A check is made in this loop in block 64 whether the current through the motor is too high. If this is the case, an error signal is then generated in block 65 and a stop signal in block 66. The program then continues on to block 75, wherefrom it returns to the main program (fig. 4). If the current is not too high the program then passes onto block 67 which checks whether the current perhaps lies below a lower limit. Should this be the case, the program then jumps once again to block 65, 66 and 75. Should this not be the case, the current then lies between the entered limit value, whereafter block 68 determines whether there is any peak current. If this is the case, the loop is then exited again, but if this is not the case the block 69 checks whether a signal has been received that the piston is lying at the end of the cylinder. Should this also be found not to be the case, the pulses of the motor sensor are counted in block 70, and subsequently multiplied in block 71 by a fixed factor, in this case 128 (7 bits), and added to a remainder value. Finally, the thus determined number is compared in block 72 with the read fertilizer factor. This latter, which as already noted is 12 bits long, is formed by multiplying the number of pulses for supplying of active substance per water pulse by 128 (or by adding 7 bits thereto). Thus multiplying the pulse quantities by a fixed factor before comparing them with each other achieves that any rounding-off errors will be comparatively small.

Should it be found in block 72 that the number of motor pulses is smaller than the fertilizer factor, the program then returns to block 64 where the various checks are again carried out prior to the number of pulses being increased by one in block 70. Should it be found however in block 72 that the number of pulses multiplied by 128 and increased with the remainder already exceeds the fertilizer factor, a number of operations are then performed in block 73. First of all the remainder is there re-defined as the number found in block 71 with the fertilizer factor subtracted, the motor is then switched off and the dosage counter increased by the counted number of motor pulses. Finally, a check is made in block 74 whether a dosing signal is still present. If this is the case, the program then returns to block 61 and the rising flank of a new water pulse is again awaited, while if a dozing signal is no longer present the program returns via block 75 to the main program.

Due to the special manner of calculating the remainder, the rounding-off error resulting from the fact that the active substance can only be dispensed in whole pulses is reduced still further. Thus, after the program has run through the loop several times and has dosed slightly too little nutrient each time, the remainder will be more than one full pulse, whereby, at the following run-through of the loop, an extra pulse of nutrient is supplied. In this way the actually dispensed amount of active substance corresponds very precisely with the desired amount.

Running through the loop from block 61 to block 74 must take place in a time that is shorter than the duration of the water pulses. This can be brought about by a suitable choice of the volume flow measuring means in relation to the speed of the processors used.

After the program has returned to the main program 46, a check is made, as discussed above, whether a refilling signal has already been generated by the main computer 11. If this is the case, the program jumps to the subroutine 54 (fig. 6) which begins in block 76 and in block 77 starts the linear motor in a direction opposed to that in the part of the program as shown in fig. 5. A check is then made in block 78 whether a liquid flow is running through the conduit 27. Should this be the case the cylinder 34 is then thus filled, which is indicated in block 79 by setting a so-called status bit. A check is then made in block 80 whether the current on the motor is the maximum permissible current. If this is the case, an error signal is then generated in block 81 and a stop signal in block 82. The subroutine then returns via block 83 to the main program (fig. 4). If the current is not the maximum, a check is then made in block 84 whether a peak current prevails. Should this be the case error and stop signals are generated again respectively in blocks 81 and 82 and the main program re-entered. Should this not be the case, a check is then made in block 85 whether the switch indicating the end of the stroke is pressed in. As long as this is not so the program returns to block 78. If this is the case however, there is first a fixed waiting period, for instance several seconds, whereafter the motor is switched off in block 87. Waiting briefly before the motor is switched off prevents the piston still being displaced under the influence of the pressures prevailing in the device 1 after reaching its end point. The piston is thus held in place until the system is at rest. After the motor is switched off a check is made in block 88 whether a filling signal is still present. As long as this is present the program continues to run through a loop in block 88. If a filling signal is no longer generated by the process computer 11 the program returns via block 83 to the main program. The filling signal is generated by the computer 11 as long as not all of the pistons 35 have reached their end point.

The dosing device and method according to the invention therefore have the following advantages:
because a volume displacement of the active substances is measured and controlled, a very accurate dosing is obtained each time,
a suitable choice of the internal diameter of the cylinder and of the stroke length of the piston enables supplying of any desired quantity of active substance to the carrier medium in an even stroke movement of the piston,
because the step size of the motors 36 can be chosen very small, a substantially constant delivery of active substance to the carrier medium can be ensured,
through the use of cylinders a relatively simply and inexpensively constructed device can be obtained,
recording of the counter reading after supplying the active substances enables monitoring of the supplied quantity,
the manner of comparing the pulses enables a very great accuracy of dosing,
and the system has a very great control accuracy.

Although the invention is described above in relation to the delivery of nutrients to the crop in a horticulture glasshouse, it will be apparent that the above described and shown method and device can also find application in other fields where components must be mixed with each other in a particular ratio. Applications can be envisaged for instance in the foodstuffs and paint industries.

## Claims

1. Method for dosed delivery to a carrier medium of at least one active substance, characterized by determining a desired volume flow of the active substance and delivering the thus determined volume flow uniformly to the carrier medium.

2. Method as claimed in claim 1, **characterized in that** the volume flow of active substance is generated by means of a controlled volume displacement.

3. Method as claimed in claim 1 or 2, **characterized in that** the active substance is injected into the carrier medium.

4. Method as claimed in any of the foregoing claims, **characterized in that** a desired mixing ratio of the active substance and the carrier medium is determined, a volume flow of the carrier medium is measured and the desired volume flow of the active substance is calculated from the determined mixing ratio and the measured volume flow of the carrier medium.

5. Method as claimed in claim 4, **characterized in that** the volume flow of the carrier medium is converted into a first pulse-form signal which after processing controls the volume displacement of the active substance.

6. Method as claimed in any of the foregoing claims, **characterized in that** the carrier medium is recirculated, and the desired volume flow of the active substance is determined by measuring the amount of the active substance already present in the carrier medium and comparing the measured amount with a given desired amount.

7. Device (1) for dosed delivery of at least one active substance to a carrier medium, provided with a transport conduit (2) for the carrier medium, at least one container (8) for an active substance connected to the transport conduit (2) and supply means (9) connecting the container (8) to the transport conduit (2), which supply means (9) are formed by at least one cylinder (34) with a piston (35) movable therein and a power source (36) connected drivingly to the piston (35).

8. Device as claimed in claim 7, **characterized in that** the power source (36) is a linear motor.

9. Device as claimed in claim 7 or 8, **characterized in that** the cylinder (34) is provided on each of its ends with a suction opening connected to the container (8) and a discharge opening connected to the transport conduit (2).

10. Device as claimed in any of the claims 7-9, **characterized in that** the cylinder (34) is made substantially of glass.

11. Device as claimed in any of the claims 7-10, **characterized in that** the supply means (9) are controllable, means (7) are connected to the transport conduit (2) for measuring a volume flow of the carrier medium, which flow measuring means (7) are connected for signal transmission to programmable means (11) for controlling the supply means (9).

12. Device as claimed in claim 11, **characterized by** means connected for signal transmission to the control means (11) for detecting a displacement of the piston (35).

13. Device as claimed in claim 12, **characterized in that** the volume flow measuring means (7) are adapted to generate a pulse-like first output signal, the displacement detection means are adapted to generate a second pulse-like output signal, and the control means (11) are programmed in order to compare the pulse-like signals with each other and on the basis thereof to generate a signal to control the supply means (9).

14. Device as claimed in claim 13, **characterized in that** the displacement detection means are formed by a so-called encoder.

15. Device as claimed in any of the claims 7-14, **characterized in that** a plurality of cylinders (34) having different bores are connected to the transport conduit (2).

16. Cylinder with piston and power source drivingly connected thereto, evidently intended for use in a device as claimed in any of the claims 7-15.
